# EUROPEAN PATENT APPLICATION

(11) **EP 4 817 788 A1**
(43) Date of publication of application: **07.10.2026**
(21) Application number: 26169760.1
(22) Date of filing: 31.03.2026
(51) Int. Cl.: B23Q 1/01, B23Q 3/155, B23Q 3/157, B23Q 39/02, B27M 1/08

(54) **MACHINE FOR CUTTING AND/OR PROCESSING SECTION BARS, IN PARTICULAR MADE OF ALUMINIUM, LIGHT ALLOYS, PVC OR THE LIKE**

(30) Priority: 04.04.2025 IT 202500007263
(71) Applicant: F.O.M. Industrie S.r.l., 47841 Cattolica (IT)
(72) Inventor: MURATORI, Marco, 47481 CATTOLICA (RN) (IT)
(74) Representative: Studio Torta S.p.A.

(57) **Abstract**

A machine for cutting and/or processing sections bars (2) has at least one processing station (11) provided with two operating units (26) arranged on opposite sides of a feeding path (P) of the section bars (2) and provided, each, with a respective support upright (27) for at least one electric spindle (29) configured to receive and hold at least one tool (30) and for at least one tool-holding store (32); the tool-holding store (32) and the electric spindle (29) of each operating unit (26) being movable relative to one another in order to move into a tool-change position and to allow the tool (30) mounted on the electric spindle (29) to be replaced.

## Description

### CROSS-REFERENCE TO RELATED APPLICATIONS

This patent application claims priority from Italian patent application no. 102025000007263, filed on April 4, 2025, the entire disclosure of which is incorporated herein by reference.

### TECHNICAL FIELD

The present invention relates to a machine for cutting and/or processing section bars, in particular made of aluminium, light alloys, PVC or the like.

### CONTEXT

In the field of cutting and processing of sections bars made of aluminium, light alloys, PVC or the like, it is known to provide a machine of the type comprising an elongated base extending in a first horizontal direction; at least one processing station obtained along the base and provided with an operating head to perform the cutting and/or processing of the section bars; a feeding device to feed the section bar along the base and through the processing station; a loading station to feed the section bars to be processed to the feeding device in a second horizontal direction transverse to the first direction; and an unloading station to unload the section bars from the feeding device in the second direction.

The operating head comprises two operating units mounted on opposite sides of a feeding path of the section bars in the second direction.

Each operating unit comprises an overhead crane, which has a substantially L shape, is movable along the base in the first direction, and supports a plurality of electric spindles mounted on the overhead crane parallel to the second direction and to a third vertical direction orthogonal to the aforesaid first and second directions.

The electric spindles are movable in the second direction and in the third direction, and are configured to receive and hold respective tools.

Generally, the operating head also comprises a further support trolley for a cutting blade configured to cut the section bars into components of shorter length.

The known machines for cutting and/or processing section bars of the type described above have several drawbacks mainly deriving from the fact that the two operating units have a relatively reduced versatility and flexibility in processing the section bars, are able to perform a relatively small number of processings of the section bars, and require the intervention of personnel for the manual replacement of the tools mounted on the electric spindles.

### SUMMARY

The object of the present invention is to provide a machine for cutting and/or processing section bars, in particular made of aluminium, light alloys, PVC or the like, that is free from the drawbacks described here above and that has a simple and economical embodiment.

According to the present invention, there is provided a machine for cutting and/or processing section bars, in particular made of aluminium, light alloys, PVC or the like, as claimed in the appended claims.

### BRIEF DESCRIPTION OF THE DRAWINGS

The present invention will now be described with reference to the appended drawings, which illustrate a non-limiting embodiment thereof, wherein:
Figure 1 is a perspective and schematic view, with parts removed for clarity, of a preferred embodiment of the machine for cutting and processing section bars of the present invention; and
Figures 2, 3 and 4 are three perspective and schematic views, with parts removed for clarity, of a detail of the machine of Figure 1.

### DESCRIPTION OF EMBODIMENTS

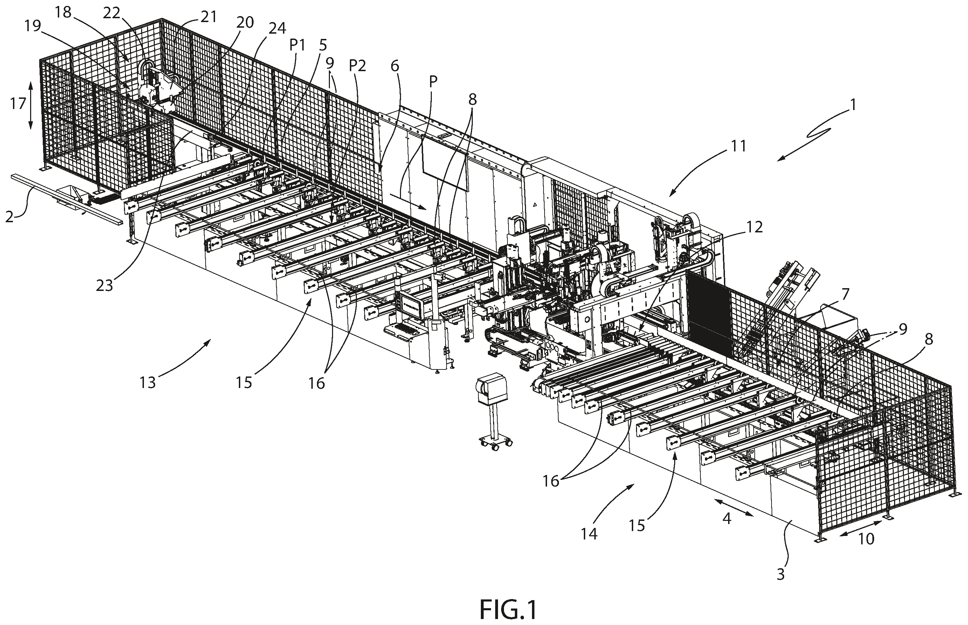

With reference to figure 1, the number 1 denotes, as a whole, a machine for cutting and processing section bars 2 made of aluminium, light alloys, PVC or the like, having an elongated shape.

The machine 1 comprises an elongated base 3, which extends in a horizontal direction 4, and is provided with a longitudinal guiding side member 5 parallel to the direction 4.

The machine 1 further comprises two roller support devices 6, 7 mounted in succession along the base 3.

Each device 6, 7 has a plurality of lower rollers 8, which are mounted to rotate around respective rotation axes 9 substantially parallel to one another and to a horizontal direction 10 transverse to the direction 4, and define a lower support surface P1 for the section bars 2.

The machine 1 also has a processing station 11 for the cutting and/or processing of the section bars 2 mounted between the devices 6 and 7 and associated with a roller support device 12 connected with said devices 6 and 7.

The machine 1 is also provided with a loading station 13 for loading the section bars 2 onto the device 6 and an unloading station 14 for unloading the section bars 2 from the device 7. Each station 13, 14 comprises a belt conveyor 15, which faces the relative device 6, 7 in the direction 10, and comprises, in turn, a plurality of conveyor belts 16, which are parallel to one another and to the direction 10, and define a lower support surface P2 for the section bars 2.

The rollers 8 are movable in a vertical direction 17 orthogonal to the directions 4 and 10 between a raised operating position, in which the surface P1 extends above the surface P2, and a lowered rest position, in which the surface P1 extends below the surface P2.

The section bars 2 are fed by a feeding unit 18 along the surface P1 of the device 6 and through the station 11 in the direction 4.

The unit 18 comprises a trolley 19 comprising, in turn, a first horizontal slide 20 movable along the side member 5 in the direction 4; a second horizontal slide 21 coupled slidably to the horizontal slide 20 in order to perform, relative to the horizontal slide 20, rectilinear movements in the direction 10; and a vertical slide 22 coupled slidably to the horizontal slide 21 in order to perform, relative to the horizontal slide 21, rectilinear movements in the direction 17.

The unit 18 further comprises a support arm 23, which has an elongated shape, extends in the direction 4, and supports a gripping member 24 connected to a free end of the arm 23.

The member 24 is coupled rotatably to the arm 23 in order to rotate, relative to the arm 23, around a rotation axis (not shown) parallel to the direction 4, and comprises two clamps (not shown) movable between a clamping position and a release position of the section bars 2.

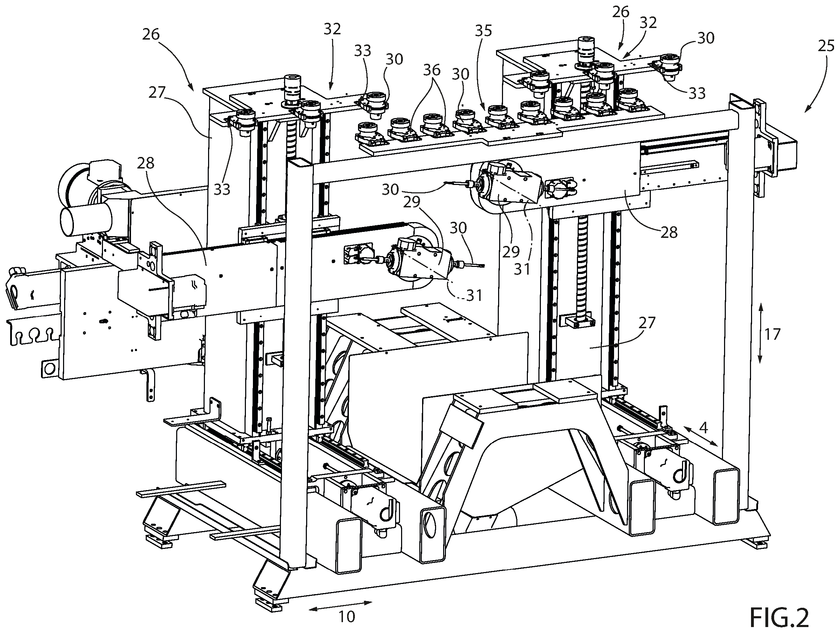

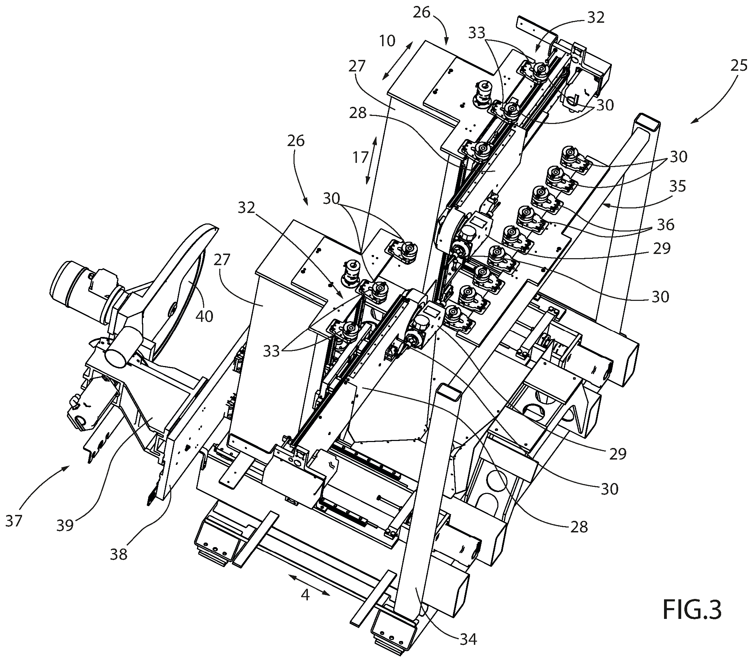

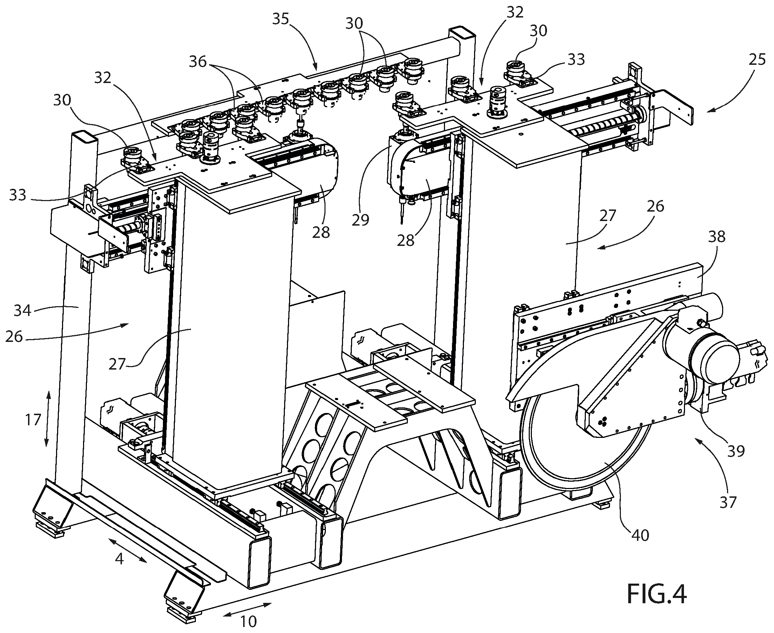

According to what is shown in Figures 2, 3, and 4, the processing station 11 is provided with an operating head 25 comprising two operating units 26 mounted on opposite sides of a feeding path P for feeding the section bars 2 in the direction 10.

Each unit 26 comprises a vertical upright 27, which extends in the direction 17, is movable along the base 3 in the direction 4, and supports a horizontal cross member 28 extending in the direction 10.

The cross member 28 is movable along the upright 27 in the direction 17, and is also coupled slidably to the upright 27 in order to move, relative to the upright 27, in the direction 10.

The cross member 28 supports at least one electric spindle 29, which is configured to receive and hold at least one tool 30, and is coupled rotatably to the cross member 28 in order to rotate, relative to the cross member 28, around at least one rotation axis 31, in this case a rotation axis parallel to the direction 4.

Each unit 26 further comprises at least one tool-holding store 32, which is mounted at an upper end of the relative upright 27 and above the relative cross member 28, extends in the direction 10, and is provided with a plurality of tool-holding seats 33, in this case three tool-holding seats 33, aligned with one another in the direction 10.

With regard to what is described above, it is opportune to specify that each electric spindle 29 is movable in the directions 10 and 17 and around the relative axis 31 in order to be moved into a tool-change position and to allow the tool 30 mounted on the electric spindle 29 to be replaced, in particular though the interposition of a tool-change device (not shown) .

The operating head 25 is further provided with a support gantry 34, which extends above the base 3 in the direction 10, and supports a fixed tool-holding store 35, which is mounted on the gantry 34 parallel to the direction 10, and has a plurality of tool-holding seats 36 aligned with one another in the direction 10.

According to a variant not shown, the operating head 25 is provided with two fixed tool-holding stores, which are fixed to the base 3 on opposite sides of the path P in the direction 10, and extend in the direction 4.

The upright 27 of a unit 26 further supports a cutting device 37 comprising a vertical slide 38 movable along the upright 27 in the direction 17, a horizontal slide 39 coupled slidably to the slide 38 in order to perform, relative to the slide 38, rectilinear movements in the direction 10, and a cutting blade 40 mounted rotatably on the slide 39 in order to cut the section bars 2.

The presence of the stores 32 and the store 35 and the rotation of the electric spindles 29 around the relative rotation axes 31:
guarantee that the operating head 25 has relatively high flexibility and versatility and that the electric spindles 29 have a relatively high number of tools 30 at their disposal;
allow the electric spindles 29 to process the section bars 2 at the free ends thereof and with a relatively high number of different angles;
allow the operating units 26 to perform processings simultaneously;
allow one operating unit 26 to perform processing of the section bars 2 and, simultaneously, the other operating unit 26 to perform a tool-change operation; and
allow the electric spindles 29 to transfer the tools 30 between the stores 32 and the store 35.

## Claims

1. A machine for cutting and/or processing section bars (2), in particular made of aluminium, light alloys, PVC or the like, the machine comprising an elongated base (3) extending in a first horizontal direction (4); at least one processing station (11) obtained along the base (3) and provided with at least one operating head (25) to cut and/or process at least one section bar (2); and a feeding unit (18) to feed the section bar (2) along the base (3) and through the processing station (11) in the first direction (4); the operating head (25) comprising two operating units (26) mounted on opposite sides of a feeding path (P) of the section bar (2) in a second horizontal direction (10) transverse to the first direction (4); each operating unit (26) comprising a support upright (27), which extends in a third vertical direction (17) orthogonal to said first and second directions (4, 10) and supports at least one electric spindle (29) configured to receive and hold at least one tool (30); and being **characterized in that** each operating unit (26) further comprises at least one tool-holding store (32) mounted on the relative support upright (27); the tool-holding store (32) and the electric spindle (29) of each operating unit (26) being movable relative to one another so as to move to a tool-change position and allow the tool (30) mounted on the electric spindle (29) to be replaced.

2. The machine according to claim 1, wherein each electric spindle (29) is mounted so as to rotate around at least one rotation axis (31), in particular parallel to the first direction (4).

3. The machine according to claim 1 or 2, wherein each operating unit (26) further comprises a support cross member (28) coupled to the relative support upright (27) in a sliding manner so as to move along the support upright (27) in the third direction (17); each electric spindle (29) being mounted on the relative support cross member (28) and being movable, relative to the relative support upright (27), in the second direction (10).

4. The machine according to claim 3, wherein each tool-holding store (32) is mounted on the relative support upright (27) above the relative support cross member (28).

5. The machine according to any one of the preceding claims, wherein each support upright (27) is movable along the base (3) in the first direction (4).

6. The machine according to any one of the preceding claims, wherein the operating head (25) is provided with at least one further tool-holding store (35) fixed to the base (3) parallel to the first direction (4) or to the second direction (10).

7. The machine according to claim 6, wherein the operating head (25) is provided with two further tool-holding stores (35), which are fixed to the base (3) on opposite sides of the feeding path (P) of the section bars (2) in the second direction (10) and extend in the first direction (4).

8. The machine according to claim 6, wherein the operating head (25) is provided with a support gantry (34) extending above the base (3) in the second direction (10) and with a further tool-holding store (35) mounted on the support gantry (34) parallel to the second direction (10).

9. The machine according to any one of the preceding claims, wherein at least one operating unit (26) is further provided with a cutting blade (40) mounted on the relative support upright (27), in particular mounted on the relative support upright (27) so as to move in said second and third directions (17).

10. The machine according to any one of the preceding claims, wherein each operating unit (26) further comprises a tool-change device interposed between the relative electric spindle (29) and the relative tool-holding store (32).
